# EUROPÄISCHE PATENTANMELDUNG

(11) **EP 1 132 650 A1**
(43) Veröffentlichungstag der Anmeldung: **12.09.2001**
(21) Anmeldenummer: 00104919.6
(22) Anmeldetag: 08.03.2000
(51) Int. Cl.: F16H 15/38, F16H 61/00

(54) **Reibradgetriebe**

(71) Anmelder: Bolter, Herbert, 6842 Koblach (AT)
(72) Erfinder: Bolter, Herbert, 6842 Koblach (AT)
(74) Vertreter: Kaminski, Susanne, Dr.

(57) **Zusammenfassung**

Ein Reibradgetriebe weist ein Antriebselement (1a, 1a') und ein angetriebenes Element (8a, 8a') auf, die um eine gemeinsame Rotationsachse (11) rotieren, wobei Antriebselement (1a, 1a') und angetriebenes Element (8a, 8a'), jeweils mindestens zwei Stirnflächen (1b, 1b', 8b, 8b') aufweisen, an denen ringförmige, toroidal geformte Ausnehmungen (1c, 1c', 8c, 8c') als Reibflächen vorgesehen sind, solcherart zwei Torus-förmige Hohlräume (6) bildend. In diesen Hohlräumen ist jeweils wenigstens ein, wenigstens einen Wälzkörper aufweisendes Zwischenglied (4) vorgesehen zur Übertragung eines Antriebsdrehmoments vom Antriebselement (1a, 1a') auf das angetriebene Element (8a, 8a'). Weiters sind Mittel zur Verstellung der Zwischenglieder (4) zur Änderung des Übersetzungsverhältnisses des Reibradgetriebes vorgesehen. Die Mittel zur Verstellung der Zwischenglieder (4) umfassen ein über ein Verstellelement gegebenenfalls mittelbar verstellbares Schneckenradgetriebe, welches zwei ringförmige, um die Rotationsachse (11) verdrehbare Schnecken (7a, 7b) aufweist, deren jeweiliges Gewinde jeweils in einen der Hohlräume (6) hineinragt. Das Gewinde greift in eine Verzahnung ein, die an einem in dem jeweiligen Hohlraum (6) angeordneten Schneckenradsegment (5) vorgesehen ist, welches mit dem Zwischenglied (4) über ein an diesem vorgesehenen Befestigungselement verbunden ist. Mittel zur synchronen Verdrehung der beiden Schnecken (7a, 7b) sind vorgesehen.

## Beschreibung

Die vorliegende Erfindung betrifft ein Reibradgetriebe nach dem Oberbegriff des Anspruchs 1 bzw. des Anspruchs 8, bzw. einen Verstellmechanismus für ein Reibradgetriebe nach dem Oberbegriff des Anspruchs 10.

Die EP-A1 0 248 515 offenbart ein Reibradgetriebe, bei dem die Drehzahl über ein hydraulisches System verstellt wird.

In herkömmlichen Getrieben wird der Anpressdruck über eine axial wirkende Federkraft oder über relativ aufwendige Vorrichtungen zur Erzeugung einer drehmomentabhängigen Axialkraft aufgebracht. Diese Axialkräfte werden dabei über das Gehäuse abgeführt. Bei diesen Getrieben stellt sich das Problem, dass bei grossem Übersetzungsverhältnis, wenn die Zwischenglieder zwei Punkte mit unterschiedliche Radien an der Antriebsscheibe und der angetriebenen Scheibe berühren, der tatsächliche Anpressdruck den durch die Axialkraft erzeugten weit übersteigen kann, denn der Anpressdruck wächst mit dem Tangens des Verstellwinkels des Zwischenglieds.

In der PCT/EP97/05938 ist nun ein Reibradgetriebe beschrieben, das uneingeschränkt schaltbar ist, bei dem eine drehmomentabhängige Vorspannung erzeugt wird und bei dem auftretende Axialkräfte nicht über das Gehäuse abgeführt werden.

Bei den bekannten Reibradgetrieben stellt die exakte und vor allem gleichmässige Einstellung der Zwischenglieder ein beachtliches Problem dar. Selbst bei hydraulischen Systemen, die zur Zeit bevorzugt eingesetzt werden, ist dies nicht in befriedigender Weise gelöst, da die Verdrehung des Zwischengliedes nichtlinear erfolgt, denn die lineare Bewegung des Hubkolbens der Hydraulik wird in eine Rotationsbewegung des Reibrades umgesetzt. Zusätzlich ist die Hubhöhe des Kolbens sehr begrenzt und ein Spiel in der mechanischen Verbindung zwischen Hubkolben und dem Zwischenglied aufgrund von Fertigungstoleranzen wird mit einem dem Verhältnis Abstand der Reibflächen dividiert durch Maximalhub proportionalen Faktor multipliziert und dadurch die Genauigkeit der Einstellung der Zwischenglieder verringert.

Der exakten Einstellung des Übersetzungsverhältnisses sind allein herstellungsbedingt Grenzen gesetzt, da aufgrund der Fertigungstoleranzen die Winkel, auf die die Verbindungsglieder eingestellt sind, im Verstellmechanismus voneinander abweichen. Die Verbindungsglieder arbeiten gegeneinander und die übertragbare Leistung sowie der Wirkungsgrad sinken rapide.

Die Erfindung hat sich demgegenüber die Aufgabe gestellt, ein Reibradgetriebe mit einem präzise regulierbaren Verstellmechanismus bzw. einen solchen Verstellmechanismus zur Verfügung zu stellen, wobei eine stufenlose Verstellung der Drehzahl ermöglicht wird und wobei insbesondere die Kräfte zur Erzeugung des Anpressdruckes über die Welle abgeführt werden können.

Die Lösung dieser Aufgabe gelingt durch die Verwirklichung der kennzeichnenden Merkmale des Anspruchs 1, bzw. derjenigen des Anspruchs 8, bzw. derjenigen des Anspruchs 10.

Vorteilhafte bzw. alternative Ausbildungen sind in den abhängigen Ansprüchen beschrieben.

Dadurch, dass als Mittel zur Verstellung der Zwischenglieder Schneckenradgetriebe vorgesehen sind, werden Fertigungstoleranzen minimiert und die genaue Einstellung der Zwischenglieder maximierbar.

Mittel zur synchronen Verdrehung der Schnecken - gegebenenfalls mittelbar über eine um die Rotationsachse drehbare Hohlwelle - gewährleisten eine exakte Arbeitsweise des Reibradgetriebes.

Bei Verwendung von in einem Käfig befindlichen Kugeln als Wälzkörper wird der Anpressdruck über die geometrische Anordnung des Käfigs beziehungsweise über die Verschiebbarkeit der Kugeln im Käfig untereinander angepasst. Liegen die Reibpunkte der Kugeln nicht auf einer gemeinsamen Achse, so kann durch die geometrische Anordnung der Kugeln ein von der Last abhängiger Anpressdruck erzeugt werden, weil die mittlere Kugel durch die Last eine Kraft erfährt, die sie in den Spalt zwischen den beiden äusseren Kugeln drängt.

Ein weiterer Vorteil bei der Verwendung von Kugeln im Käfig besteht darin, dass der Anpressdruck nicht vom Tangens des Verstellwinkels des Zwischengliedes abhängt, wie das bei gebräuchlichen Reibradgetrieben der Fall ist, denn die mittlere Kugel ist beweglich und erzeugt unabhängig von einem äusseren Druck bei gleicher Last immer den gleichen Anpressdruck.

Weiters lässt sich bei Verwendung von Kugeln als Wälzkörper die Drehzahl beliebig einstellen, unabhängig vom Betriebszustand des Getriebes. Die Drehzahl kann nicht nur im Leerlauf sondern ebenso unter Last, wie auch bei Stillstand, uneingeschränkt verändert werden. Bei Fahrzeugantrieben ist dies von grosser Bedeutung, da sich, nach einem abrupten Bremsvorgang von hoher Geschwindigkeit zum Stillstand, das Reibradgetriebe nicht im gewünschten Betriebszustand befindet, um mit hohem Drehmoment anfahren zu können.

Aufgrund der exakten Einstellungsmöglichkeit der Zwischenglieder lässt sich auch das Übersetzungsverhältnis des Reibradgetriebes und damit auch die Drehzahl der angetriebenen Welle sehr genau einstellen.

Die Zufuhr der Antriebsenergie erfolgt in einer Ausführung des erfindungsgemässen Reibradgetriebes über die Antriebswelle, die mit der angetriebenen Welle in einer Achse liegt. Daher muss das Moment nicht über den Umfang der Antriebsscheibe, etwa durch ein Zahnrad, übertragen werden. Bekanntlich arbeiten Zahnräder bei hohen Umfangsgeschwindigkeiten nicht gut. Bei der beschriebenen Bauform entstehen selbst bei hohen Drehzahlen kaum Fliehkräfte, da die Zwischenglieder nur um ihre eigene Achse und die beiden Scheiben um die gemeinsame Rotationsachse rotieren.

Es können auch zwei oder mehrere Antriebselemente und angetriebene Elemente zur Erhöhung des übertragbaren Drehmomentes aneinandergereiht werden. Bei der paarweisen Anordung von Reibradgetrieben müssen wegen des symmetrischen, spiegelverkehrten Aufbaus des Reibradgetriebes die Zwischenglieder gegengleich verdreht werden. Dieser symmetrische Aufbau des Reibrades ermöglicht es, die Axialkräfte entlang der Welle abzuführen. Das Gehäuse wird daher nicht mit den Axialkräften belastet.

Eine weitere erfindungsgemässe Ausbildung ist ein Reibradgetriebe mit integriertem Elektromotor. Dabei kann eine solche Kombination ganz unabhängig von der Art des Reibradgetriebes vorgesehen sein. Diese Konstruktion ist aus mehreren Gründen vorteilhaft. Der augenscheinlichste Vorteil ist, dass Platz eingespart werden kann. Es ist kein externes Getriebe notwendig, auch fällt die Verbindungswelle weg und die Lagerung von Antriebsscheibe und Antrieb kann gemeinsam erfolgen. Diese Konstruktion ist aber auch deswegen von Interesse, weil bei Kombination mit weiteren Antrieben deren Antriebswelle durch den Rotor des Elektromotors laufen kann, ohne dabei das stufenlose Getriebe belasten zu müssen. Diese Ausbildung ist nicht nur auf die Kombination von Reibradgetriebe mit Elektromotor beschränkt, sondern kann in gleicher Weise für die Kombination von Reibrad mit Gasturbine oder Reibrad mit Kreiskolbenmaschine verwendet werden. Prinzipiell ist auf diese Weise die Kombination von Reibrad mit jedem Antrieb mit durchgehender Welle möglich. Dabei kann der Antrieb mit einem erfindungsgemässen Reibradgetriebe, aber auch mit einem herkömmlichen Reibradgetriebe kombiniert werden.

Eine Kombination Elektromotor-Verbrennungsmotor ermöglicht es, die guten Eigenschaften des Elektromotors mit dem Vorteil der grossen Reichweite des Verbrennungsmotors zu kombinieren. Dazu eignet sich am besten die Kombination Verbrennungsmotor und Elektromotor mit stufenlosem Getriebe. Die erfindungsgemässe Ausbildung von Elektromotor mit integriertem Reibradgetriebe ist in dieser Hinsicht besonders interessant.

Einer der Vorteile von Elektromotoren im Kraftfahrzeugbereich ist die Energierückgewinnung durch das Rekuperationsverfahren, bei dem der Elektromotor als Generator betrieben wird und dadurch die Bremsenergie in Form von elektrischer Energie zurückgewonnen und gespeichert werden kann. Der Wirkungsgrad eines Generators ist aber ebenfalls von der Drehzahl und dem Drehmoment abhängig. Durch die Kombination von Elektromotor mit Reibradgetriebe kann der beim Bremsvorgang als Generator benützte Elektromotor weitestgehend im günstigsten Drehzahlbereich betrieben und dadurch der Energierückgewinn optimiert werden. Es kann auch während des Betriebs ein Teil der Leistung des Verbrennungsmotors zum Aufladen der Batterie aufgewendet werden. Lange Wartezeiten beim stationären Aufladen der Batterie entfallen damit.

Im folgenden wird die Erfindung anhand der Abbildungen rein beispielhaft erläutert. Es zeigen:
- Figur 1a und 1b:: zwei Ausbildungsvarianten eines erfindungsgemässen Reibradgetriebes, wobei Figur la einen Längsschnitt durch ein erfindungsgemässes Reibradgetriebe und Figur 1b eine alternative Ausbildungsform eines erfindungsgemässen Reibradgetriebes zeigt;
- Figur 2:: eine aufgeschnittene, 3-dimensionale Darstellung des in Figur la dargestellten Reibradgetriebes;
- Figur 3:: eine Vergrösserung des Bereiches von Figur 2, die den Verstellmechanismus verdeutlicht;
- Figur 4:: eine Darstellung von zur Kraftübertragung zwischen Antriebselement und angetriebenem Element in Frage kommenden Zwischenglieder und
- Figur 5:: einen Längsschnitt durch eine Kombination von einem Elektromotor mit einem erfindungsgemässen Reibradgetriebe.

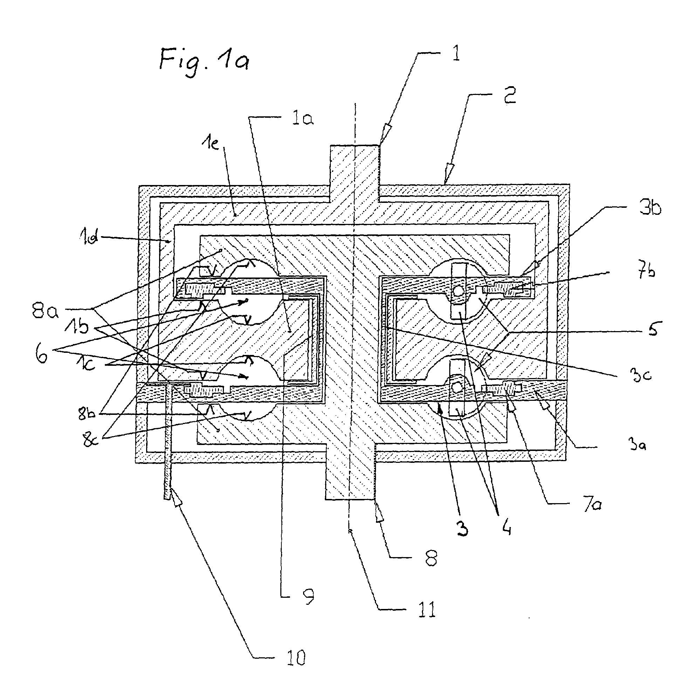

Figur 1a zeigt ein entlang einer Rotationsachse 11 aufgeschnittenes Reibradgetriebe. Eine Antriebswelle 1 und eine angetriebene Welle 8 liegen auf dieser gemeinsamen Rotationsachse 11. Ein Antriebselement la ist über ein Verbindungselement mit der Antriebswelle 1 fest verbunden. Das Verbindungselement ist topfförmig aufgebaut, wobei dessen Topfrand ld an das Antriebselement la und dessen Topfboden 1e zentrisch an die Antriebswelle 1 anschliesst. Das angetriebenen Element 8a ist ebenso fest mit der angetriebenen Welle 8 verbunden und besteht aus zwei angetriebenen Scheiben, welche links und rechts des Antriebselementes la angeordnet sind und durch die angetriebene Welle 8 miteinander starr gekoppelt sind. Die Antriebswelle 1 und die angetriebene Welle 8 sind in bekannter Weise im Gehäuse 2 gelagert (Lager nicht eingezeichnet). Ein Antriebselement 1a ist als Antriebsscheibe ausgebildet und hat auf beiden Stirnflächen 1b um die Rotationsachse 11 ringförmige angeordnete Ausnehmungen 1c. Das aus den angetriebenen Scheiben bestehende angetriebene Element 8a hat auf den dem Antriebselement la zugewandten Stirnflächen 8b ebenfalls um die Rotationsachse 11 ringförmige angeordnete Ausnehmungen 8c gleicher Form und Grösse, die gemeinsam mit den Ausnehmungen 1c des Antriebselementes la Hohlräume 6 der Form eines Torus bilden.

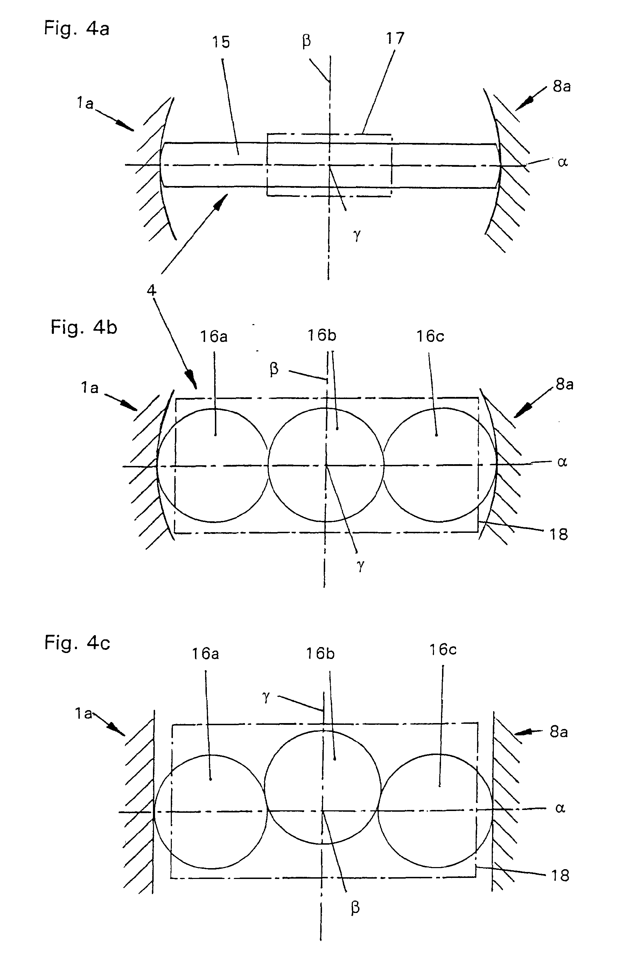

In den Hohlräumen 6 befinden sich zur Übertragung der Drehmomente und zur Drehzahlregulierung Zwischenglieder 4. Diese Zwischenglieder 4 bestehen aus Wälzkörpern und einem Befestigungselement und werden in Figur 4 näher beschrieben. Die Zwischenglieder 4 sind an einer Halterung 3 drehbar befestigt und jeweils fest verbunden mit einem Schneckenradsegment 5, dessen Zähne in das Gewinde von Schnecken 7a beziehungsweise 7b eingreifen. Die Schnecken 7a und 7b sind hier in der Form eines Ringes mit einem inneren Gewinde ausgebildet und sind ebenfalls in der Halterung 3 drehbar gelagert. Die erste Schnecke 7a besitzt auch eine Aussenverzahnung, in die ein als Verstellelement wirksames Zahnrad 10 eingreift, welches die Verdrehung der ersten Schnecke 7a von aussen, gegebenenfalls mittelbar über ein entsprechendes Stellglied ermöglicht.

Die Halterung 3 besteht aus zwei im wesentlichen scheibenförmigen Halteteilen 3a und 3b, die über ein die angetriebene Welle 8 umhüllendes Verbindungsrohr 3c miteinander verbunden sind, und ist mit dem Gehäuse 2 fest verbunden. Die beiden Halteteile 3a und 3b befinden sich in den Zwischenräumen zwischen Antriebselement 1a und angetriebenen Scheiben des angetriebenen Elementes 8a. Ein erster Halteteil 3a ist als Scheibe mit einer zentrischen Bohrung ausgebildet, durch die die angetriebene Welle 8 geht. Weitere Ausnehmungen sind an den Stellen vorgesehen, an denen die Zwischenglieder 4 im Halteteil 3a drehbar befestigt sind. Ein zweiter Halteteil 3b ist gleich aufgebaut wie der erste, mit Ausnahme der Befestigung desselben am Gehäuse 2. Diese Befestigung ist aufgrund der Verbindung der Antriebswelle 1 mit dem Antriebselement la über das Verbindungselement nicht möglich. Daher wird der zweite Halteteil 3b über ein Verbindungsrohr 3c, welches sich im Zwischenraum von Antriebselement la und angetriebener Welle 8 befindet, mit dem ersten Halteteil 3a fest verbunden.

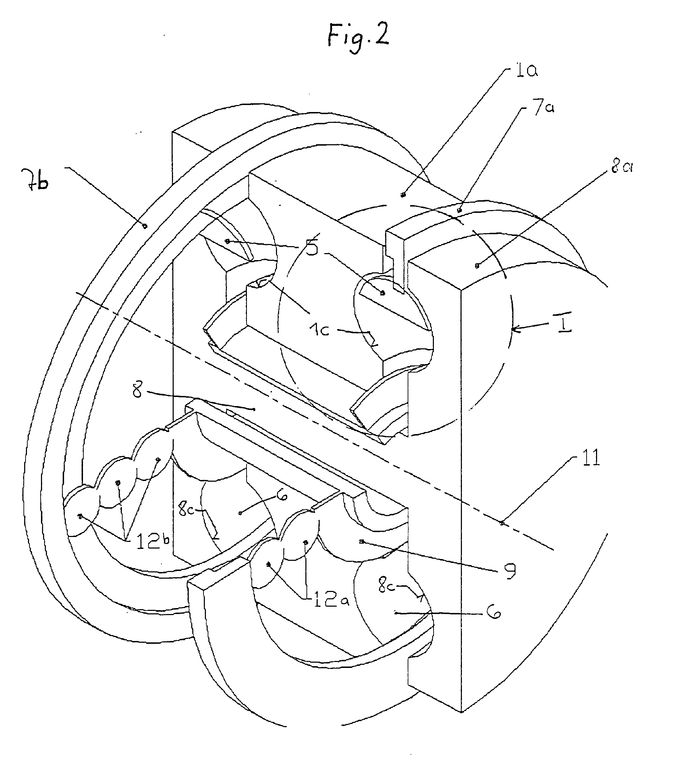

Die Verdrehung der Schnecke 7b kann nicht wie die Schnecke 7a von aussen, gegebenenfalls mittelbar durch ein entsprechendes Stellglied erfolgen, sondern wird über eine Hohlwelle 9 ermöglicht, die um die Rotationsachse 11 drehbar ist und sich wie das Verbindungsrohr 3c zwischen Antriebselement la und angetriebener Welle 8 befindet. Die Hohlwelle 9 kann bezüglich der Rotationsachse 11 entweder innerhalb oder, wie in Figur la dargestellt, ausserhalb des Verbindungsrohres 3c liegen. Zwischen den Schnecken 7a beziehungsweise 7b und der Hohlwelle 9 sind zum Beispiel Zahnradkränze 12a beziehungsweise 12b (siehe Fig.2) angeordnet, die einerseits die Verdrehung der Schnecke 7a auf die Hohlwelle 9 übertragen beziehungsweise andererseits die Verdrehung der Hohlwelle 9 auf die Schnecke 7b. Anstatt der Zahnkränze 12a beziehungsweise 12b können zum Beispiel auch Ketten zur Übertragung der Verdrehung verwendet werden.

Wird die Antriebswelle 1 in Rotation versetzt, werden über das Antriebselement la Wälzkörper in den Zwischengliedern 4 angetrieben. Die Wälzkörper rotieren dabei um ihre eigene Achse, wodurch die Fliehkräfte gering bleiben. Durch die Rotation der Wälzkörper wird das angetriebene Element 8a in eine der Rotationsrichtung des Antriebselementes la entgegengesetzte Richtung in Rotation versetzt.

Durch Verdrehen des Zahnrades 10 wird die erste Schnecke 7a und über deren Innengewinde das ihr zugeordnete Schneckenradsegment 5 verdreht. Durch die erste Schnecke 7a wird auch der erste Zahnradkranz 12a (Fig.2) verdreht; die Verdrehung auf die Hohlwelle 9 und über den zweiten Zahnradkranz 12b auf die zweite Schnecke 7b übertragen. Dadurch ist gewährleistet, dass die beiden Schnecken 7a und 7b synchron verdreht werden. Alternativ kann auch der erste Zahnkranz 12a direkt vom Zahnrad 10 verdreht werden. Werden die Schneckenradsegmente 5 und damit die Zwischenglieder 4 verdreht, ändert sich das Übersetzungsverhältnis des Reibradgetriebes.

Die beiden mit den Zwischengliedern 4 verbundenen Schneckenradsegmente 5 müssen wegen des symmetrischen, spiegelverkehrten Aufbaus des Reibradgetriebes gegengleich verdreht werden. Daher muss sich die zweite Schnecke 7b in entgegengesetzter Richtung zur ersten Schnecke 7a drehen oder es muss alternativ jeweils eine Schnecke mit linksgängigem und eine Schnecke mit rechtsgängigem Gewinde verwendet werden.

Durch den symmetrischen Aufbau mit gegengleich ausgerichteten Zwischengliedern 4 ist es möglich, die Kräfte, die durch den Anpressdruck zwischen dem Antriebselement 1a und den Zwischengliedern 4 und zwischen diesen und dem angetriebenen Element 8a erzeugt werden, über die angetriebene Welle 8 abzuführen. Somit wird das Gehäuse 2 mit diesen Kräften nicht belastet.

Die Schnecken 7a und 7b können alternativ ein äusseres Gewinde haben. In diesem Fall werden die Schnecken 7a und 7b auf der der Rotationsachse 11 zugewandten Seite der Hohlräume 6 liegen. Auch die Schneckenradsegmente 5 sind dann auf der der Rotationsachse 11 zugewandten Seite des Zwischengliedes 4 befestigt. Es kann aber auch direkt die Hohlwelle 9 an jedem Ende jeweils ein Aussengewinde besitzen. In diesem Fall muss die Hohlwelle 9 mit ihren Gewinden jeweils in einen Hohlraum 6 hineinragen, damit die Schneckenradsegmente 5 mit Ihren Zähnen in deren Gewinde eingreifen können. Die Verstellung erfolgt in diesem Fall ebenso über den Zahnradkranz 12a (Fig.2), der vom Zahnrad 10 verdreht wird.

Durch den vollkommen symmetrischen Aufbau ist es möglich, Antriebswelle 1 und angetriebene Welle 8 zu vertauschen. Das bedeutet, dass bei Verwendung eines Elektromotors als Antrieb der Motor auch jederzeit als Generator betrieben werden kann. Das Antriebselement 1a kann wahlweise auch über ein Zahnradgetriebe oder eine andere kraftschlüssige Verbindung mit dem Antrieb verbunden sein. In diesem Fall kann auch das Halteteil 3b am Gehäuse befestigt werden und das Verbindungsrohr 3c ist nicht notwendig. Auch muss der Verstellmechanismus der Schnekken 7a und 7b nicht über die Hohlwelle 9 erfolgen. Die zweite Schnecke 7b kann genauso wie die erste Schnecke 7a direkt von aussen, über ein Mittel zur synchronen Verstellung der Zwischenglieder verstellt werden.

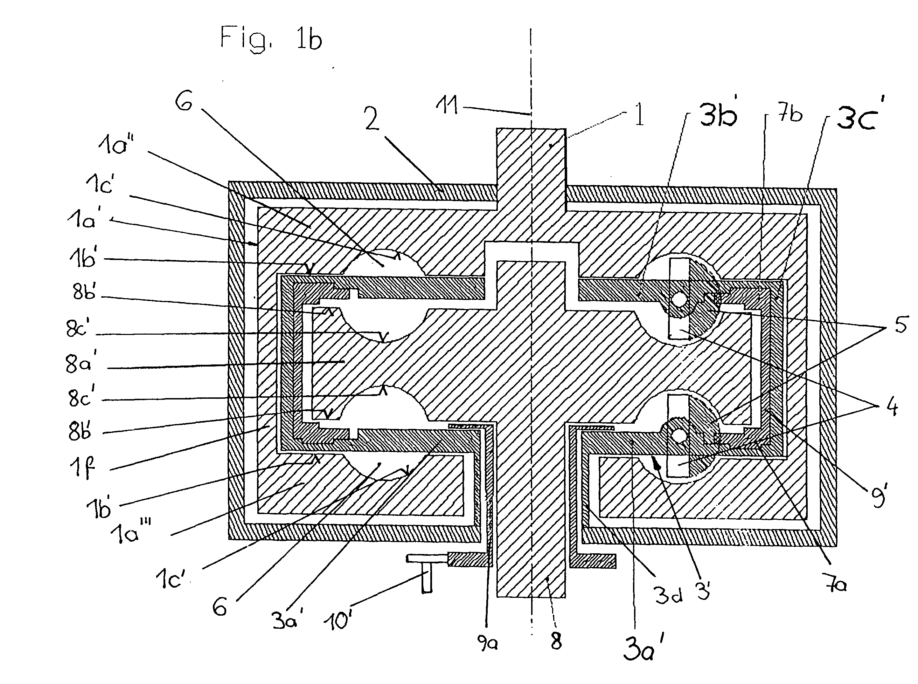

Figur 1b zeigt eine alternative Ausbildungsform eines erfindungsgemässen Reibradgetriebes. Der Unterschied zu der in Figur la beschriebenen Variante ist, dass das Antriebselement 1a' aus zwei äusseren Antriebsscheiben 1a" und 1a''' gebildet wird, während das angetriebene Element 8a' aus einer zwischen den beiden äusseren Scheiben liegende mittlere Scheibe besteht. Die beiden Antriebsscheiben 1a'' und 1a ''' sind über einen Hohlzylinder 1f, der sich ausserhalb des angetriebenen Elementes 8a' befindet und das Verbindungselement darstellt, miteinander starr gekoppelt. Die Antriebsscheibe 1a" ist fest mit der Antriebswelle 1 und das angetriebene Element 8a' fest mit der angetriebenen Welle 8 verbunden. Einander zugewandte Stirnflächen lb'beziehungsweise 8b' des Antriebselementes 1a' beziehungsweise des angetriebenen Elementes 8a' haben ringförmige Ausnehmungen 1c' beziehungsweise 8c', die, jeweils einen Hohlraum 6 der Form eines Torus bilden.

Die Zwischenglieder 4 sind in gleicher Weise, wie unter Figur la beschrieben, in den Hohlräumen angeordnet und befestigt. Eine Halterung 3' besteht im wesentlichen aus den gleichen Teilen wie die Halterung 3 in Figur la, mit dem Unterschied, dass ein Verbindungsrohr 3c' zur Verbindung der beiden Halteteile 3a' und 3b' zwischen dem angetriebenen Element 8a' und dem Hohlzylinder 1f liegt und die Verbindung zum Gehäuse 2 über ein zwischen angetriebener Welle 8 und Antriebsscheibe 1a''' gelegenes Anschlussteil 3d erfolgt. Das Anschlussteil 3d ist im wesentlichen ein Rohr.

Eine Hohlwelle 9' liegt - ebenso wie das Verbindungsrohr 3c' - zwischen angetriebenem Element 8a' und Hohlzylinder 1f und gewährleistet, dass die beiden Schnecken 7a und 7b synchron verdreht werden. Die Hohlwelle 9' kann dabei wie in Figur la beschrieben bezüglich der Rotationsachse 11 ausserhalb oder innerhalb des Verbindungsrohres 3c' liegen. Die Hohlwelle 9' in Figur 1b ist so ausgebildet, dass sie selbst zwei innere Gewinde trägt und die Funktion der beiden Schnecken 7a und 7b übernimmt. Die Gewinde der Hohlwelle 9' müssen dann, wie schon in Figur la beschrieben, jeweils in einen Hohlraum hineinragen, um in die Verzahnung der Schneckenradsegmente 5 eingreifen zu können.

Die Verdrehung der Schnecken 7a und 7b wird hierbei nur indirekt über einen Zahnkranz 12a (Fig.2) möglich und kann über eine zweite Hohlwelle 9a erfolgen, die - ebenso wie der Anschlussteil 3d - zwischen angetriebener Welle 8 und Antriebsscheibe 1a ''' liegt. Die zweite Hohlwelle 9a ist so aufgebaut wie die Hohlwelle 9 aus Figur la und besitzt an beiden Enden eine Verzahnung. Die eine Verzahnung greift in ein Zahnrad 10' ein, welches - gegebenenfalls mittelbar über ein entsprechendes Stellglied - verdreht wird. Die andere Verzahnung greift in die Zähne des Zahnradkranzes 12a (Fig.2) ein und stellt die Verbindung zur Schnecke 7a her. Die zweite Hohlwelle 9a kann bezüglich der Rotationsachse 11 wiederum innerhalb, wie in Figur 1b dargestellt, oder ausserhalb des Anschlussteiles 3d liegen.

Es gibt noch eine andere Möglichkeit den Zahnradkranz 12a (Fig.2) zu verdrehen. Dazu wird eine Verbindungswelle innerhalb eines Mantelbereiches des Anschlussteiles 3d angeordnet, die mit beiden Enden aus dem Anschlussteil 3d hervorragt und an beiden Enden Verzahnungen aufweist, die jeweils in das Zahnrad 10' beziehungsweise in die Zähne des Zahnradkranzes 12a (Fig.2) eingreifen.

Auch in der in Figur 1b gezeigten Ausführungsform des Reibradgetriebes können die Schnecken 7a und 7b ein äusseres Gewinde aufweisen. In diesem Fall werden die Schnecken auf dem der Rotationsachse zugewandten Seite der Hohlräume 6 liegen. Der Aufbau ist dem in Figur la beschriebenen äquivalent.

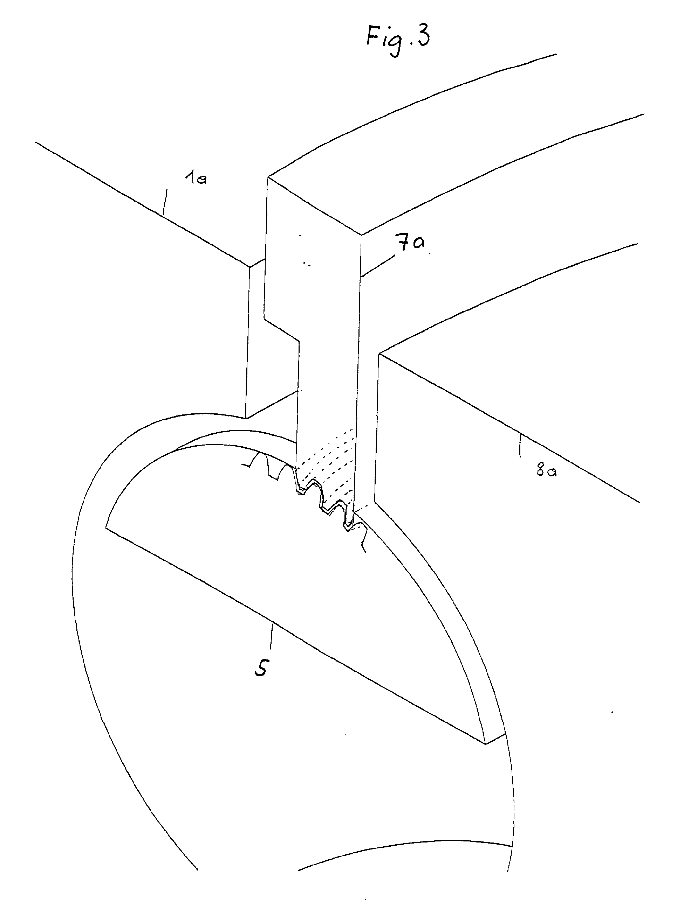

Figur 2 zeigt anhand eines Schnittes durch einen Schrägriss einen wesentlichen Teils des Reibradgetriebes, das in Figur la dargestellt ist und anhand des in Figur 3 gezeigten Details, die Funktionsweise des Verstellmechanismus.

Zentral angeordnet ist das Antriebselement la mit den stirnseitigen toroidalen Ausnehmungen 1c zu sehen. Links und rechts davon sind die angetriebenen Scheiben angeordnet, mit den ebenfalls stirnseitig angebrachten, toroidal ausgebildeten Ausnehmungen 8c, auf der dem Antriebselement la zugewandten Seite. Die beiden angetriebenen Scheiben sind über die angetriebene Welle 8 fest miteinander verbunden und bilden gemeinsam das angetriebene Element 8a. In den durch die Ausnehmungen 1c und 8c gebildeten Hohlräumen 6 sind die Schneckenradsegmente 5 sichtbar. In den Zwischenräumen zwischen dem Antriebselement la und den angetriebenen Scheiben sind die Schnecken 7a und 7b angeordnet. Diese Schnecken 7a und 7b ragen mit ihrem inneren Gewinde in den Hohlraum 6 wo sie, bei Verstellung der Zwischenglieder 4 in den Zähnen der Schneckenradsegmenten 5 kämmen. Zwischen angetriebener Welle 8 und Antriebselement la ist die Hohlwelle 9 drehbar gelagert und jeweils über die Zahnradkränze 12a beziehungsweise 12b mit den Schnecken 7a beziehungsweise 7b verbunden. Wird zur Veränderung des Übersetzungsverhältnis des Reibradgetriebes die Schnecke 7a verdreht, so wird über den Zahnradkranz 12a die Verdrehung der Schnecke 7a auf die Hohlwelle 9 übertragen und weiters über den Zahnradkranz 12b die Schnecke 7b verdreht. Antriebswelle 1 sowie die Verbindung mit dem Antriebselement la sind der Übersichtlichkeit halber nicht eingezeichnet. Ebenso sind die Halterung 3 sowie die Zwischenglieder 4 nicht abgebildet.

Figur 3 zeigt den Ausschnitt I aus Figur 2.

In Figur 4 sind mögliche Zwischenglieder 4 zur Übertragung des Drehmomentes zwischen Antriebselement la und angetriebenem Element 8a dargestellt. Figur 4a zeigt ein Reibrad 15 als Wälzkörper, das in einem strichliert eingezeichneten Befestigungselement 17 um eine Achse β drehbar gelagert ist. Das Befestigungselement 17 ist in der Halterung 3 (siehe Figur 1a) um eine Achse γ drehbar befestigt. Das Antriebselement la und das angetriebene Element 8a rotieren um die Rotationsachse 11 (Fig.1a). Zur Änderung der Drehzahl wird das Befestigungselement um die Achse γ verschwenkt und mit ihm auch das Reibrad 15. Dieser Vorgang ist nicht bei Stillstand des Reibradgetriebes möglich, weil die Verdrehung des Reibrades 15 zur Verstellung der Drehzahl orthogonal auf die Drehachse β des Reibrades 15 ist. Figur 4b zeigt eine demgegenüber bevorzugte Ausführung, bei der in einem als Käfig 18 ausgebildeten Befestigungselement drei Kugeln 16a, 16b und 16c als Wälzkörper dienen. Der Käfig 18 ist so wie das Befestigungselement 17 aus Figur 4a in der Halterung 3 (Fig.1a) drehbar befestigt. Kugeln 16a, 16b und 16c als Wälzkörper zu verwenden ist deshalb von Vorteil, weil sich das Reibradgetriebe dann in jedem möglichen Betriebszustand schalten lässt, da Kugeln in jeder Richtung beweglich sind. In Figur 4c ist eine zu Figur 4b senkrechte Darstellung der in Figur 4b dargestellten Wälzkörper in ihrem Käfig 18 zu sehen. Es ist deutlich zu erkennen, dass der Mittelpunkt der mittleren Kugel 16b ausserhalb der Achse α des Befestigungselementes liegt, was zur Folge hat, dass der Anpressdruck sich mit der Last verändert, da mit höher werdender Last die mittlere Kugel 16b zwischen die zwei äusseren Kugeln 16a und 16c hineingepresst wird.

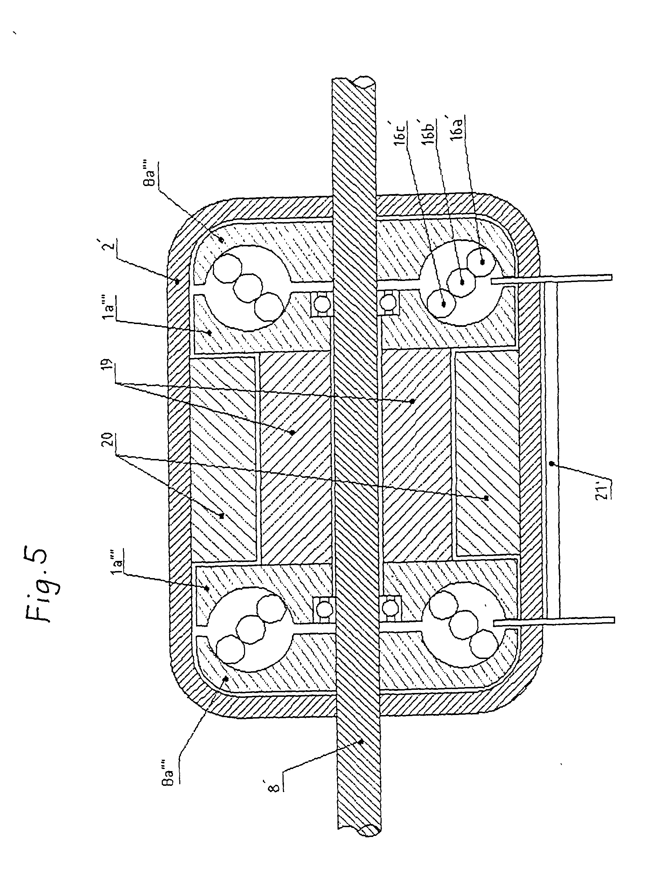

Figur 5 zeigt die Kombination von einem Reibradgetriebe mit einem Elektromotor. Elektromotor und Reibradgetriebe befinden sich in einem gemeinsamen Gehäuse 2'. Der Elektromotor besteht aus einem Stator 20, der fest verbunden mit dem Gehäuse 2' ist, und einem Rotor 19, der direkt mit den beiden Antriebsscheiben, die das Antriebselement 1a"" bilden, gekoppelt ist. Dadurch lassen sich Rotor 19 und Antriebselement 1a"" gemeinsam lagern. Die beiden ausserhalb des Antriebselement 1a"" angeordneten angetriebenen Scheiben, die gemeinsam das angetriebene Element 8a"" bilden, sind fest mit der angetriebenen Welle 8' verbunden. Zwischen dem Antriebselement 1a"" und dem angetriebenen Element 8a"" sind Kugeln 16a, 16b, und 16c als Wälzkörper angeordnet. Der Käfig 18 sowie die Halterung 3 sind der Übersichtlichkeit halber nicht eingezeichnet.

Die Verstellung der Kugeln 16a, 16b, und 16c im Käfig 18 ist im Falle der Kombination von Reibradgetriebe mit Elektromotor, da die Antriebswelle 1 wegfällt, einfach von aussen durch ein Mittel zur synchronen Verstellung 21 der Zwischenglieder 4 möglich. Damit ist die Hohlwelle 9 überflüssig, da die Übertragung der Verdrehung der ersten Schnecke 7a über die Hohlwelle 9 auf die zweite Schnecke 7b nicht notwendig ist (Figur 1a). Es sind auch Reibräder 15 anstelle der Kugeln 16a, 16b, und 16c als Wälzkörper einsetzbar.

Eine Kombination von Elektromotor mit Reibradgetriebe, ist nicht auf ein erfindungsgemässes Reibradgetriebe beschränkt, sondern kann jedes beliebige Reibradgetriebe sein. Auch die Bauart und die Anordnung des Elektromotors ist beliebig. Zum Beispiel kann der Rotor 19 des Elektromotors, anders als in Figur 5 dargestellt, nicht zwischen den beiden Antriebsscheiben des Antriebselementes 1a"" angeordnet sein, sondern an dessen Umfang, wobei das Antriebselement 1a"", ebenso wie bei dem in Figur 1a dargestellten Reibradgetriebe, aus nur einer Antriebsscheibe besteht. Es ist auch die Kombination von Elektromotor mit einem einzelnen Reibradgetriebe möglich, dessen Antriebselement an einer Stirnseite des Rotors befestigt ist.

Diese Integration eines Elektromotors mit dem Reibradgetriebe bietet mehrere Vorteile. Offensichtlich ist die Platzersparnis: Es ist keine Verbindungswelle zwischen Antrieb und Reibradgetriebe notwendig und Reibradgetriebe und Elektromotor sind in einem gemeinsamen Gehäuse untergebracht. Auch die gemeinsame Lagerung von Antriebselement 1a"" und Rotor 19 des Elektromotors trägt zur Platzersparnis bei. Der aber vielleicht grösste Vorteil der Kombination von Reibradgetriebe und Elektromotor ist, dass die angetriebene Welle 8' durch den Elektromotor durchgeht, das heisst, dass der stufenlos drehzahlregulierbare Elektromotor mit anderen Antrieben kombiniert werden kann, ohne das Reibradgetriebe mit der Leistung der anderen Antriebe belasten zu müssen.

Anstatt des Elektromotors kann auch ein Drehkolbenmotor oder eine Gasturbine mit dem Reibradgetriebe kombiniert werden. Grundsätzlich kann jeder Antrieb mit einem Reibrad in der in Figur 5 dargestellten Form kombiniert werden, sofern dieser Antrieb eine durchgehende angetriebene Welle 8' ermöglicht. Bei der Kombination von Gasturbine mit Reibradgetriebe, ist es notwendig Planetenradgetriebe zwischen Gasturbine und Antriebselement 1a"" des Reibradgetriebes zwischenzuschalten, da das Reibradgetriebe nicht für derart hohe Drehzahlen auslegbar ist.

Ein Verbrennungsmotor hat bei geringer Drehzahl ein sehr geringes Drehmoment und somit auch eine geringe Leistung, da das Drehmoment multipliziert mit der Drehzahl eine der Leistung des Motors proportionale Grösse ergibt. Ein Elektromotor mit elektronischer Steuerung hat bis zum Erreichen der Bemessungsdrehzahl, die Drehzahl für die der Motor ausgelegt ist, ein konstantes Drehmoment und damit eine linear anwachsende Leistung und von der Bemessungsdrehzahl bis zur Maximaldrehzahl eine konstante Leistung. Der Grund für die unterhalb der Bemessungsdrehzahl linear abfallende Leistung ist die Feldschwäche des Elektromotors. Die Leistungsentfaltung ist damit im Teillastbereich, das heisst bei Drehzahlen unterhalb der Maximaldrehzahl, wesentlich besser als die einer Verbrennungskraftmaschine. Ein Elektromotor mit stufenlosem Getriebe hat eine konstant hohe Leistung unabhängig von der Drehzahl, weil eine Leistungsumwandlung vorgenommen wird, was bedeutet, dass bei einer Reduktion der Drehzahl das Drehmoment anwächst.

Wegen des schlechten Verhaltens einer Gasturbine im instationären Betrieb kann ein Fahrzeug nicht direkt mechanisch angetrieben werden, da das Fahrzeug nicht zu beschleunigen ist. Dies gelingt nur über serielle Hybrid-Antriebe oder stufenlose Getriebe, die die gesamte Beschleunigung regeln, bei gleichbleibender Turbinendrehzahl.

Das instationäre Verhalten des Verbrennungsmotors ist ebenfalls sehr schlecht. Die Maximalleistung erreicht ein Verbrennungsmotor nur bei Maximaldrehzahl gegen Vollast. Im Stadtverkehr werden beispielsweise von einem 75 kW Motor bei maximaler Beschleunigung nur ca. 20 kW an mechanischer Leistung zur Verfügung gestellt. Der Leistungsabfall zwischen stationärem und instationärem Betrieb ist beim Elektromotor ebenfalls vorhanden; allerdings nicht so gravierend wie bei einem Verbrennungsmotor.

Bei Motoren wird die Leistung aus Drehzahl und Drehmoment berechnet. Das bedeutet, daß bei abfallender Drehzahl auch die Leistung abfällt. Mechanische stufenlose Getriebe bewirken eine stufenlose Leistungsumwandlung, so daß bei abfallender Drehzahl das Drehmoment linear erhöht wird, wenn der Motor auf einer konstanten Drehzahl betrieben wird und somit die abgegebene Leistung konstant bleibt.

Ein großer Stellbereich dieser Getriebe ist jedoch schlecht. Von Vorteil ist es, diesen Stellbereich auf ein Schaltgetriebe und ein stufenloses Getriebe zu verteilen. Dazu ist es notwendig, wärend des Schaltvorganges im Schaltgetriebe das stufenlose Getriebe über den gesamten Stellbereich zu verstellen. Die Geschwindigkeit, mit der ein Getriebe verstellt werden kann, wird im allgemeinen als Stellgeschwindigkeit bezeichnet. Stellgeschwindigkeiten, wie sie in oben beschriebenen Konzepten benötigt werden, können nur erreicht werden, wenn die Verstellbewegung eine reine Rollbewegung ist. Schon eine relativ geringe Gleitbewegung bei der Verstellung kann ein Reibradgetriebe zerstören. Das ist ein weiterer wichtiger Gesichtspunkt, der für den Einsatz eines erfindungsgemässen Reibradgetriebes spricht.

## Patentansprüche

1. Reibradgetriebe mit einem Antriebselement (1a, 1a') und einem angetriebenen Element (8a, 8a'), die um eine gemeinsame Rotationsachse (11) rotieren, wobei Antriebselement (1a, 1a') und angetriebenes Element (8a, 8a'), jeweils mindestens zwei Stirnflächen (1b, 1b', 8b, 8b') aufweisen, an denen ringförmige, toroidal geformte Ausnehmungen (1c, 1c', 8c, 8c') als Reibflächen vorgesehen sind, solcherart zwei Torus-förmige Hohlräume (6) bildend, in welchen jeweils wenigstens ein, wenigstens einen Wälzkörper aufweisendes Zwischenglied (4) vorgesehen ist zur Übertragung eines Antriebsdrehmoments vom Antriebselement (1a, 1a') auf das angetriebene Element (8a, 8a'), wobei Mittel zur Verstellung der Zwischenglieder (4) zur Änderung des Übersetzungsverhältnisses des Reibradgetriebes vorgesehen sind, **dadurch gekennzeichnet, dass** die Mittel zur Verstellung der Zwischenglieder (4) ein über ein Verstellelement gegebenenfalls mittelbar verstellbares Schneckenradgetriebe umfassen, welches zwei ringförmige, um die Rotationsachse (11) verdrehbare Schnecken (7a, 7b) aufweist, deren jeweiliges Gewinde jeweils in einen der Hohlräume (6) hineinragt, welches Gewinde in eine Verzahnung eingreift, die an einem in dem jeweiligen Hohlraum (6) angeordneten Schneckenradsegment (5) vorgesehen ist, welches mit dem Zwischenglied (4) über ein an diesem vorgesehenen Befestigungselement verbunden ist, und wobei Mittel zur synchronen Verdrehung der beiden Schnecken (7a, 7b) vorgesehen sind.

2. Reibradgetriebe nach Anspruch 1, **dadurch gekennzeichnet, dass** Antriebselement (1a, 1a') und/oder angetriebenes Element (8a, 8a') zweiteilig, insbesondere jeweils in Form von Scheiben, ausgebildet sind, die jeweils über ein antreibendes Mittel bzw. über ein angetriebenes Mittel miteinander verbunden sind.

3. Reibradgetriebe nach Anspruch 2, **dadurch gekennzeichnet, dass** das antreibende Mittel eine Antriebswelle (1) oder der Rotor (19) eines Antriebes ist.

4. Reibradgetriebe nach Anspruch 2 oder 3, **dadurch gekennzeichnet, dass** das angetriebene Mittel eine angetriebene Welle (8) oder der Rotor (19) eines Antriebes ist.

5. Reibradgetriebe nach einem der vorhergehenden Ansprüche, **dadurch gekennzeichnet, dass** die Mittel zu synchronen Verdrehung der beiden Schnecken wenigstens eines der folgenden Teile aufweisen:
- eine um die Rotationsachse drehbare, ein Gewinde aufweisende Hohlwelle (9, 9');
- wenigstens ein Übertragungselement, gegebenenfalls in Form eines Zahradkranzes (12a, 12b), bzw. wenigstens eines Zahnrades, welches Übertragungselement jeweils zwischen einer der Schnecken (7a, 7b) und der Hohlwelle (9, 9') bzw. zwischen einer der Schnecken und der Verstellvorrichtung in Wirkverbindung angeordnet ist.

6. Reibradgetriebe nach einem der vorhergehenden Ansprüche, **dadurch gekennzeichnet, dass** das Zwischenglied (4) jeweils wenigstens einen Wälzkörper und ein Befestigungselement (17, 18) umfasst, gegebenenfalls in Form von wenigstens drei in einem als Käfig (18) ausgebildeten Befestigungselement angeordneten Kugeln (16a, 16b, 16c), oder in Form eines in dem Befestigungselement (17) drehbar gelagerten Reibrades (15).

7. Reibradgetriebe nach Anspruch 6, **dadurch gekennzeichnet, dass** das Befestigungselement jedes Zwischenglieds (4) an einer Halterung (3, 3') drehbar befestigt ist, welche Halterung (3, 3') an einem Gehäuse (2) für das Reibradgetriebe befestigt ist, welche Halterung (3, 3') wenigstens jeweils ein in den jeweiligen Hohlraum (6) hineinragendes Halteteil (3a, 3a`, 3b, 3b`) aufweist, wobei gegebenenfalls eine - gegebenenfalls als die angetriebene Welle (1) umhüllendes Verbindungsrohr (3c) ausgebildete - die beiden Halteteile (3a, 3b) miteinander verbindende Verdbindung vorgesehen ist.

8. Reibradgetriebe - insbesondere nach einem der Ansprüche 3 bis 7 - mit einem Antriebselement (1a, 1a') und einem angetriebenen Element (8a, 8a'), die um eine gemeinsame Rotationsachse (11) rotieren, wobei Antriebselement (1a, 1a') und angetriebenes Element (8a, 8a') jeweils mindestens eine Stirnfläche (1b, 1b', 8b, 8b') mit jeweils wenigstens einer Reibfläche aufweisen, zwischen denen wenigstens ein, wenigstens einen Wälzkörper aufweisendes Zwischenglied (4) vorgesehen ist zur Übertragung des Antriebsdrehmoments vom Antriebselement (1a, 1a') auf das angetriebene Element (8a, 8a'), **dadurch gekennzeichnet, dass** - insbesondere innerhalb eines gemeinsamen Gehäuses (2) - ein Antrieb in Form eines Elektromotors, einer Gasturbine oder einer Kreiskolbenmaschine vorgesehen ist und wobei der Rotor (19) des Antriebes antreibendes Mittel für das Antriebselement (1a, 1a') ist.

9. Reibradgetriebe mit einem Antrieb nach Anspruch 8, **dadurch gekennzeichnet, dass** das Antriebselement (1a, 1a') zweiteilig, insbesondere als zwei um die Rotationsachse (11) rotierende Scheiben, ausgebildet ist, wobei der Rotor (19) des Antriebes als antreibendes Mittel zwischen den beiden Teilen des Antriebselements (1a, 1a') angeordnet ist.

10. Verstellmechanismus für ein Reibradgetriebe, welches Reibradgetriebe ein Antriebselement und ein angetriebenes Element aufweist, die um eine gemeinsame Rotationsachse rotieren, wobei Antriebselement und angetriebenes Element jeweils mindestens eine Stirnfläche aufweisen, an der eine ringförmige, toroidal geformte Ausnehmung als Reibfläche vorgesehen sind, solcherart wenigstens einen Torus-förmigen Hohlraum bildend, in welchem jeweils wenigstens ein, wenigstens einen Wälzkörper aufweisendes Zwischenglied vorgesehen ist zur Übertragung eines Antriebsdrehmoments vom Antriebselement auf das angetriebene Element, wobei Mittel zur Verstellung der Zwischenglieder zur Änderung des Übersetzungsverhältnisses des Reibradgetriebes vorgesehen sind, **dadurch gekennzeichnet, dass** die Mittel zur Verstellung des Zwischenglieds ein über ein Verstellelement gegebenenfalls mittelbar verstellbares Schneckenradgetriebe umfassen, welches eine ringförmige, um die Rotationsachse verdrehbare Schnecke aufweist, deren Gewinde in den Hohlraum hineinragt, welches Gewinde in eine Verzahnung eingreift, die an einem in dem Hohlraum angeordneten Schneckenradsegment vorgesehen ist, welches mit dem Zwischenglied über ein an diesem vorgesehenen Befestigungselement verbunden ist.
